# EUROPÄISCHE PATENTANMELDUNG

(11) **EP 2 730 884 A1**
(43) Veröffentlichungstag der Anmeldung: **14.05.2014**
(21) Anmeldenummer: 12192203.3
(22) Anmeldetag: 12.11.2012
(51) Int. Cl.: G01B 9/00, G01B 11/00

(54) **Verfahren zur Überprüfung von Bauteilfehlern**

(71) Anmelder: Siemens Aktiengesellschaft, 80333 München (DE)
(72) Erfinder: Glüge, Michael, 13088 Berlin (DE); Kern, Rene, 12435 Berlin (DE); Sczepurek, Tristan, 13129 Berlin (DE); Sperlich, Kathrin, 10555 Berlin (DE)

(57) **Zusammenfassung**

Die Erfindung betrifft ein Verfahren zur Überprüfung der Einhaltung zumindest eines Vorgabemaßes (a₁, b₁, c₁, d₁; a₂, b₂, c₂, d₂ e) eines innerhalb eines von außen zugänglichen Hohlraums eines Bauteils vorhanden Bauteilfehlers unter Verwendung eines Endoskops (1) und einer Lehre (10).

## Beschreibung

Die vorliegende Erfindung betrifft ein Verfahren zur Überprüfung der Einhaltung zumindest eines Vorgabemaßes eines innerhalb eines von außen zugänglichen Hohlraums eines Bauteils vorhandenen Bauteilfehlers.

Bei der Herstellung von Produkten sowie während der Werkstückbearbeitung können Bauteilfehler entstehen, beispielsweise in Form von Rissen, Ungänzen oder dergleichen. Diese können, wenn das Produkt während des Betriebs hohen Beanspruchungen ausgesetzt wird, zum Versagen des Bauteils führen. Entsprechend ist es gängige Praxis, hoch beanspruchte Produkte vor ihrem Einsatz auf das Vorhandensein von Bauteilfehlern zu überprüfen und zu bewerten, ob ermittelte Bauteilfehler den Beanspruchungen während des Betriebs standhalten werden oder nicht.

Im Stand der Technik sind unterschiedliche Verfahren zum Erfassen und Bewerten von Bauteilfehlern bekannt. Oberflächenfehler können beispielsweise im Rahmen einer Farbeindringprüfung sichtbar gemacht werden. Bei der Farbeindringprüfung wird die zu untersuchende Oberfläche mit einer farbigen Prüfflüssigkeit behandelt. Diese dringt aufgrund der Kapillarwirkung in Risse oder in zur Oberfläche geöffnete Poren ein. Im Anschluss wird überschüssige Prüfflüssigkeit von der Oberfläche des Bauteils entfernt und ein Entwickler aufgebracht, der die in die Risse bzw. Poren eingezogene Prüfflüssigkeit bindet, wodurch der Oberflächenfehler optisch hervorgehoben wird. In der Entwicklerschicht sind dann selbst winzige Oberflächenfehler gut erkennbar. Anstelle einer farbigen Prüfflüssigkeit kann auch eine fluoreszierende Prüfflüssigkeit verwendet werden, welche die Oberflächenfehler unter UV-Licht sichtbar macht.

Die Bewertung der ermittelten Bauteilfehler erfolgt normalerweise anhand von vorab definierten Vorgabemaßen, die eine Abmessung einer bestimmten Bauteilfehlerart nicht überschreiten darf. Liegt die Abmessung des Bauteilfehlers noch innerhalb des Vorgabemaßes, so wird das Bauteil als gut angesehen. Überschreitet die überprüfte Abmessung des Bauteilfehlers hingegen das Vorgabemaß, so ist die Anzeige als unzulässig zu bewerten. Das Vorgabemaß gibt somit also ein nicht zu überschreitendes Grenzmaß vor. Zur Durchführung der Bewertung wird normalerweise die Ist-Abmessung des Fehlers in einem ersten Schritt messtechnisch erfasst und dann in einem zweiten Schritt bestimmt, ob die gemessene Ist-Abmessung das Vorgabemaß überschreitet oder nicht. Daraufhin wird das Bauteil in Abhängigkeit vom Ergebnis als "gut" oder als "beanstandet" deklariert.

Die zuvor beschriebene Vorgehensweise gestaltet sich naturgemäß schwieriger, wenn in einem Hohlraum eines Werkstücks vorhandene Bauteilfehler zu ermitteln und zu bewerten sind. In diesem Zusammenhang wurde bereits die Verwendung speziell ausgebildeter Endoskope vorgeschlagen, die auch als Boroskope bezeichnet werden, mit deren Hilfe ein Bediener das Innere von außen zugänglicher Hohlräume betrachten kann. Diese Geräte umfassen normalerweise eine äußere Lichtquelle, deren Licht über in einem starren oder flexiblen Endoskopschaft angeordnete Lichtleitfaserbündel zu einem Bildaufnahmekopf übertragen wird, sowie einen Festkörper-Bildsensor und ein Linsensystem, die in dem vorderen Ende des Endoskopschaftes angeordnet und mit einer äußeren Videoanzeige verbunden sind. Ein solches Gerät ist beispielsweise in der US-A-4,491,865 offenbart. Ein Problem besteht allerdings dahingehend, die unter Verwendung eines Endoskops ermittelten Bauteilfehler zu bewerten, da die Abmessungen eines über die äußere Videoanzeige angezeigten Bauteilfehlers maßgeblich davon abhängen, wie weit der Festkörper-Bildsensor an den Bauteilfehler herangeführt wird. Entsprechend können über die Abmessungen des Bauteilfehlers ohne weitere Hilfsmittel keine verlässlichen Aussagen getroffen werden. Zur Behebung des Problems schlägt die DE-A-3 629 435 vor, über eine zusätzliche Lichtquelle einen in einem vorbestimmten Winkel projizierten Lichtpunkt zu erzeugen, dessen relative Verschiebung verwendet werden kann, die Entfernung des Bauteilfehlers zu berechnen. Auf diese Weise lässt sich die Videoanzeige skalieren und eine Abmessung eines Bauteilfehlers berechnen. Ein Nachteil eines solchen Gerätes besteht allerdings darin, dass das Endoskop nicht nur mit einer zusätzlichen Lichtquelle sondern auch mit einer entsprechenden Rechnereinheit versehen werden muss, was mit hohen Kosten einhergeht. Darüber hinaus kann der Abstand des Bildaufnahmekopfes zum Bauteilfehler mit dem vorgeschlagenen Endoskop prinzipbedingt nur dann ordnungsgemäß bestimmt werden, wenn der Bauteilfehler in einer Ebene senkrecht zur optischen Achse des Endoskops angeordnet ist.

Ausgehend von diesem Stand der Technik ist es eine Aufgabe der vorliegenden Erfindung, ein Verfahren der eingangs genannten Art zu schaffen, das flexibel einsetzbar ist und schnell, einfach, preiswert, zerstörungsfrei sowie mit einem verlässlichen und reproduzierbaren Bewertungsergebnis durchführbar ist.

Zur Lösung dieser Aufgabe schafft die vorliegende Erfindung ein Verfahren zur Überprüfung der Einhaltung zumindest eines Vorgabemaßes eines innerhalb eines von außen zugänglichen Hohlraums eines Bauteils vorhandenen Bauteilfehlers, das die Schritte aufweist: Einführen eines Endoskopschaftes eines Endoskops in den Hohlraum des Bauteils derart, dass der Bauteilfehler für einen Bediener durch das Endoskop sichtbar ist; Einführen einer stabartig ausgebildeten, das Vorgabemaß definierenden Lehre in den Hohlraum des Bauteils und Positionieren der Lehre derart, dass das Vorgabemaß in unmittelbarer Umgebung einer zu überprüfenden Abmessung des Bauteilfehlers angeordnet und für den Bediener ebenfalls durch das Endoskop sichtbar ist; visuelles Vergleichen der zu überprüfenden Abmessung des Bauteilfehlers mit dem Vorgabemaß der Lehre durch den Bediener und messfreies Bewerten durch den Bediener, ob die zu überprüfende Abmessung des Bauteilfehlers das Vorgabemaß überschreitet oder nicht.

Ein wesentlicher Vorteil der Verwendung einer das Vorgabemaß definierenden Lehre besteht darin, dass durch einen einfachen visuellen Vergleich des Vorgabemaßes mit der zu überprüfenden Abmessung des Bauteilfehlers eine eindeutige und schnelle Aussage darüber getroffen werden kann, ob die zu überprüfende Abmessung des Bauteilfehlers das Vorgabemaß, das als Bezugsnormal dient, überschreitet oder nicht. Entsprechend einfach und schnell kann bewertet werden, ob das Bauteil aufgrund des überprüften Bauteilfehlers für die spätere Anwendung geeignet ist oder nicht, also ob das Bauteil "gut" oder "Ausschuss" ist. Da unter Verwendung der Lehre lediglich der Soll-Zustand mit dem Ist-Zustand des Bauteilfehlers verglichen wird, bleibt eine Messung unter Ermittlung von Zahlenwerten aus. Entsprechend kann ein kostengünstiges Endoskop mit sehr einfachem Aufbau verwendet werden. Insgesamt schafft die vorliegende Erfindung somit ein zerstörungsfreies Verfahren zur Überprüfung von innerhalb eines von außen zugänglichen Hohlraums eines Bauteils vorhandenen Baufehlern, das flexibel einsetzbar ist und schnell, einfach, preiswert sowie mit einem verlässlichen und reproduzierbaren Bewertungsergebnis durchführbar ist.

Gemäß einer Ausgestaltung des erfindungsgemäßen Verfahrens wird dieses an einem im bestimmungsgemäßen Zustand montierten Bauteil in situ durchgeführt. Entsprechend können Kosten vermieden werden, die mit der Demontage und dem Transport von zu prüfenden Bauteilen einhergehen.

Gemäß eine Variante des erfindungsgemäßen Verfahrens handelt es sich bei dem Bauteilfehler um einen Oberflächenfehler, wie beispielsweise einen Oberflächenriss, eine Ungänze oder dergleichen, wobei der Oberflächenfehler mit einer farbigen Prüfflüssigkeit behandelt wird, um den Oberflächenfehler optisch hervorzuheben, und das Endoskop seinen Arbeitsbereich mit sichtbarem Licht ausleuchtet. Mit anderen Worten wird bei dieser Variante eine herkömmliche Farbeindringprüfung durchgeführt, wie sie eingangs bereits beschrieben wurde.

Gemäß einer weiteren Variante des erfindungsgemäßen Verfahrens handelt es sich bei dem Bauteilfehler ebenfalls um einen Oberflächenfehler in Form eines Oberflächenrisses, einer Ungänze oder dergleichen, wobei der Oberflächenfehler mit einer fluoreszierenden Prüfflüssigkeit behandelt wird und das Endoskop seinen Arbeitsbereich mit UV-Licht ausleuchtet, bevorzugt mit UV-Licht und mit sichtbarem Licht. Mit anderen Worten wird vorliegend also die Durchführung einer Eindringprüfung unter Verwendung einer fluoreszierenden Prüfflüssigkeit vorgeschlagen, die dahingehend von Vorteil ist, dass selbst kleinste Oberflächenfehler mit dem bloßen Auge gut erkennbar hervorgehoben werden.

Bevorzugt ist das Vorgabemaß durch einen Abschnitt im Bereich des freien Endes der Lehre definiert. Entsprechend kann das Vorgabemaß problemlos in unmittelbarer Umgebung einer zu überprüfenden Abmessung eines Bauteilfehlers angeordnet werden.

Vorteilhaft ist das Vorgabemaß der Lehre beidseitig durch Kanten der Lehre definiert, insbesondere durch eine vorspringende Kante. Kanten sind unter der Beleuchtung des Endoskops gut erkennbar, da sie einfallendes Licht sehr gut reflektieren, wodurch für den Benutzer ein deutlicher Hell-Dunkel-Kontrast erzielt wird.

Gemäß einer Ausgestaltung der vorliegenden Erfindung ist zumindest eine Kante durch eine umlaufende Nut oder einen umlaufenden Vorsprung der Lehre gebildet. So kann das Vorgabemaß beispielsweise durch eine am freien Ende der Lehre vorgesehenen Kante und eine durch eine umlaufende Nut definierte Kante definiert sein.

Die Lehre kann in einem vorbestimmten Abstand vor dem das Vorgabemaß definierenden Lehrenabschnitt abgewinkelt ausgebildet sein, wobei der Winkel bevorzugt 90° beträgt. In Abhängigkeit von der Lage des Bauteilfehlers innerhalb des Bauteilhohlraums kann das durch die Lehre definierte Vorgabemaß Dank einer solchen Abwinklung problemlos in unmittelbarer Umgebung der zu überprüfenden Abmessung des Bauteilfehlers angeordnet werden.

Die Lehre ist bevorzugt aus einem korrosionsbeständigen Stahl hergestellt, insbesondere aus V2A-Stahl. Entsprechend ist eine korrosionsbedingte Beschädigung des Vorgabemaßes nicht zu befürchten.

Vorteilhaft weist die Lehre an demjenigen freien Ende, das nicht in den Hohlraum des Bauteils eingeführt wird, einen ergonomisch ausgebildeten Griffbereich auf, der insbesondere einen größeren Durchmesser als der das Vorgabemaß definierende Lehrenabschnitt umfasst, so dass sich die Lehre von einem Benutzer gut handhaben lässt.

Bei dem Bauteil handelt es sich bevorzugt um ein Gasturbinenbauteil, insbesondere um eine Kühlfluidkanäle aufweisende Turbinenschaufel.

Weitere Merkmale und Vorteile der vorliegenden Erfindung werden anhand der nachfolgenden Beschreibung einer Ausführungsform eines erfindungsgemäßen Verfahrens unter Bezugnahme auf die beiliegende Zeichnung deutlich. Darin ist
- Figur 1: eine schematische Darstellung, die ein Endoskop und eine Lehre zeigt, die zur Durchführung eines erfindungsgemäßen Verfahrens geeignet sind;
- Figur 2: eine vergrößerte Ansicht des Ausschnitts II in Figur 1, welche die Ausbildung eines ein Vorgabemaß definierenden Lehrenabschnitts zeigt;
- Figur 3: eine vergrößerte Ansicht entsprechend Figur 2, die eine alternative Ausbildung eines ein Vorgabemaß definierenden Lehrenabschnitts zeigt; und
- Figur 4: ein schematisches Ablaufdiagramm eines Verfahrens gemäß einer Ausführungsform der vorliegenden Erfindung.

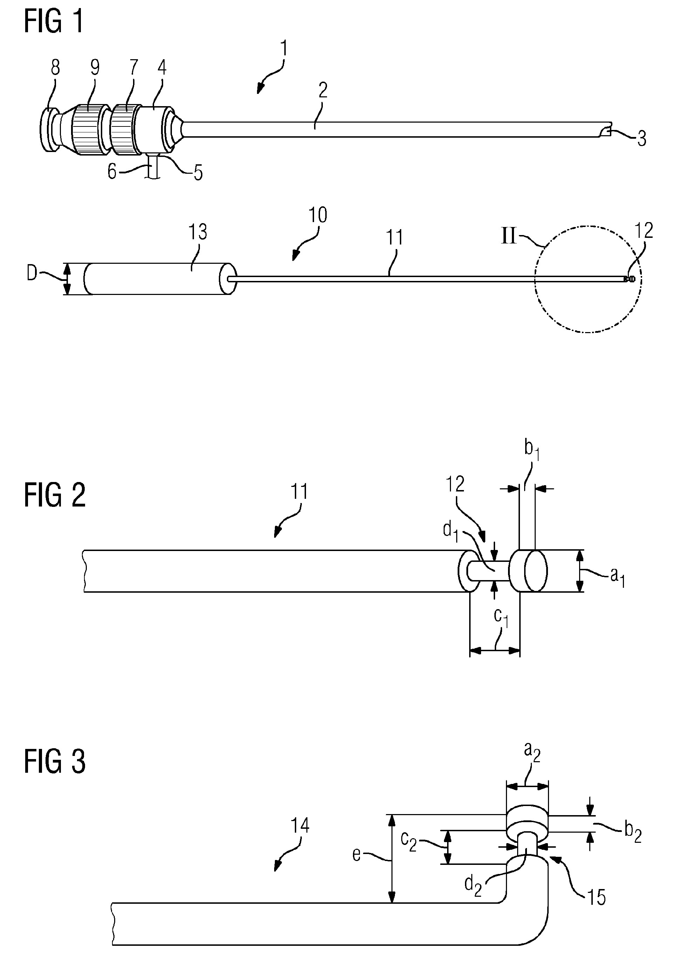

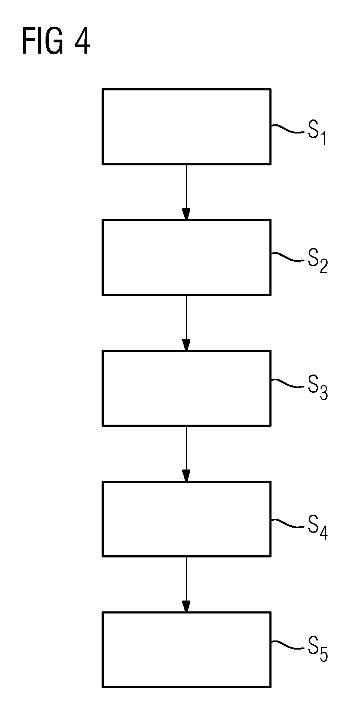

Figur 1 zeigt beispielhaft ein Endoskop 1, das zur Durchführung des unter Bezugnahme auf Figur 4 noch näher erläuterten erfindungsgemäßen Verfahrens verwendet werden kann. Das Endoskop 1 umfasst einen als starres Rohr ausgebildeten Endoskopschaft 2, der ein nicht näher dargestelltes Linsensystem aufnimmt und an seinem freien Ende mit einem Objektiv 3 versehen ist. An seinem anderen Ende ist der Endoskopschaft 2 mit einem Gehäuse 4 verbunden. Das Gehäuse 4 umfasst einen Lichtleiteranschluss 5, an den ein Lichtleiterkabel 6 angeschlossen ist, das zu einer nicht näher dargestellten Lichtquelle führt. Entsprechend kann in bekannter Weise Licht von der Lichtquelle zum freien Ende des Endoskopschaftes 2 geleitet werden. Darüber hinaus ist an dem Gehäuse 4 ein manuell betätigbares Stellrad 7 angeordnet, das dazu dient, den Endoskopschaft 2 um seine Längsachse zu drehen. Ferner umfasst das Endoskop 1 ein Okular 8 sowie einen Fokussierring 9.

Neben dem Endoskop 1 zeigen die Figuren 1 und 2 eine erste Ausgestaltung einer Lehre 10. Die Lehre 10 umfasst einen stabförmig ausgebildeten, aus korrosionsbeständigem Stahl hergestellten Lehrenabschnitt 1 mit kreisförmigem Querschnitt und einem vorbestimmten Außendurchmesser a₁. In einem Abstand b₁ vom freien Ende des Lehrenabschnitts 11 ist eine umlaufende Nut 12 mit konstanter Breite c₁ und einem Nutdurchmesser d₁ vorgesehen. Die Maße a₁, b₁, c₁ und d₁ definieren vorbestimmte Vorgabemaße der Lehre 10, die während der Durchführung des erfindungsgemäßen Verfahrens zur Beurteilung von Bauteilfehlern eines Werkstückes dienen. Das Maß a₁ beträgt vorliegend 1 mm. Das Maß b₁ kann wahlweise 0,6 mm, 1 mm, 2,5 mm oder 6 mm betragen. Das Maß c₁ entspricht 2 mm, und das Maß d₁ beträgt 0,5 mm. Dank der beabstandet vom freien Ende des Lehrenabschnitts 11 angeordneten Nut 12 ist jedes der zuvor genannten Vorgabemaße a₁, b₁, c₁ und d₁ jeweils durch Bauteilkanten begrenzt und für einen Benutzer damit deutlich erkennbar.

Die Lehre 10 umfasst ferner einen ergonomisch ausgebildeten Griffbereich 13, dessen Außendurchmesser D wesentlich größer als der Außendurchmesser a des Lehrenabschnitts 11 ist, damit der Griffbereich 13 problemlos von einem Benutzer gegriffen und die Lehre 10 einfach und bequem gehandhabt werden kann.

Figur 3 zeigt einen stabförmigen Lehrenabschnitts 14 einer alternativ ausgebildeten Lehre. Der Lehrenabschnitt 14 ist aus korrosionsbeständigem Stahl hergestellt und weist einen kreisförmigen Querschnitt mit einem Außendurchmesser a₂. In einem Abstand b₂ vom freien Ende des Lehrenabschnitts 14 ist eine umlaufende Nut 15 mit konstanter Breite c₂ und einem Nutdurchmesser d₂ vorgesehen. In einem Abstand e vom freien Ende ist der Lehrenabschnitt 14 in einem Winkel α abgewinkelt, wobei der Winkel α vorliegend 90° beträgt. Die Maße a₂, b₂, c₂ , d₂ und e definieren vorbestimmte Vorgabemaße, die während der Durchführung des erfindungsgemäßen Verfahrens zur Beurteilung von Bauteilfehlern eines Werkstückes dienen. Das Maß a₂ beträgt vorliegend 1 mm. Das Maß b₂ beträgt 0,5 mm. Das Maß c₂ entspricht 0,5 mm, das Maß d₂ beträgt 0,5 mm und das Maß e 2 mm. Dank der beabstandet vom freien Ende des Lehrenabschnitts 14 angeordneten Nut 15 ist auch bei dieser Ausgestaltung jedes der zuvor genannten Vorgabemaße a₂, b₂, c₂, d₂ und e jeweils durch Bauteilkanten begrenzt und für einen Benutzer damit deutlich erkennbar

Nachfolgend wird unter Bezugnahme auf Figur 4 ein Verfahren zur Überprüfung der Einhaltung zumindest eines Vorgabemaßes eines innerhalb eines von außen zugänglichen Hohlraums eines Bauteils vorhandenen Bauteilfehlers gemäß einer Ausführungsform der vorliegenden Erfindung erläutert. Bei dem Bauteil kann es sich beispielsweise um eine mit Kühlfluidkanälen versehene Turbinenschaufel einer Gasturbine handeln. Derartige Turbinenschaufeln sind im Stand der Technik hinlänglich bekannt, weshalb auf eine Darstellung sowie auf weitere Erläuterungen der Turbinenschaufel vorliegend verzichtet wird.

Um zu überprüfen, ob in den durch die Kühlfluidkanäle der Turbinenschaufel gebildeten Hohlräumen Bauteilfehler vorhanden sind, wie beispielsweise Oberflächenfehler in Form von Rissen, Poren oder dergleichen, und um zu bewerten, ob während des bestimmungsgemäßen Betriebs der Turbinenschaufel aufgrund der dort vorherrschenden hohen Beanspruchungen aufgrund dieser Bauteilfehler die Gefahr eines Bauteilversagens besteht, werden erfindungsgemäß folgende Schritte durchgeführt:
In einem ersten optionalen Schritt S1 werden die auf Bauteilfehler zu überprüfenden Oberflächen des Hohlraums zur Durchführung einer Farbeindringprüfung mit einer Prüfflüssigkeit behandelt, wobei es sich bei der Prüfflüssigkeit wahlweise um eine farbige oder eine fluoreszierende Prüfflüssigkeit handeln kann. Die Durchführung einer Farbeindringprüfung ist bekanntermaßen dahingehend von Vorteil, dass vorhandene Oberflächenfehler optisch hervorgehoben und entsprechend mit dem Auge wesentlich einfacher und besser identifizierbar sind.

In einem weiteren Schritt S2 wird der Endoskopschaft 2 des in Figur 1 dargestellten Endoskops 1 beispielsweise durch eine Kühlfluidbohrung derart in den Hohlraum des Bauteils eingeführt, dass die Oberflächen des Hohlraums von einem Benutzer durch das Okular 8 betrachtet werden können. Die Betrachtung erfolgt, wenn eine farbige Prüfflüssigkeit verwendet wurde, unter sichtbarem Licht, und, wenn eine fluoreszierende Prüfflüssigkeit verwendet wurde, unter UV-Licht, wobei das Licht von einer Lichtquelle über durch den Endoskopschaft 2 in den Hohlraum geleitet wird. Wird festgestellt, dass ein Bauteilfehler vorhanden ist, so ist nachfolgend zu bewerten, ob von dem Bauteilfehler während des Betriebs der Turbinenschaufel ein Gefahrenpotential ausgeht oder nicht. Hierzu ist festzustellen, ob die Abmessungen des Bauteilfehlers experimentell oder rechnerisch ermittelte Grenzwerte für die entsprechende Bauteilfehlerart überschreiten. Diese Grenzwerte werden vorliegend durch die Vorgabemaße a₁, b₁, c₁ und d₁ repräsentiert, die im Endbereich des Lehrenabschnitts 11 der Lehre 10 definiert sind, bzw. durch die Vorgabemaße a₂, b₂, c₂, d₂ und e des Lehrenabschnitts 14, wenn dieser anstelle des Lehrenabschnitts 11 verwendet wird.

In einem Schritt S3 wird nunmehr der Lehrenabschnitt 11 der Lehre 10 in den Hohlraum des Bauteils derart eingeführt und positioniert, dass das zur Bewertung des Bauteilfehlers erforderliche Vorgabemaß a₁, b₁, c₁ und d₁ in unmittelbarer Umgebung der entsprechend zu überprüfenden Abmessung des Bauteilfehlers angeordnet und für den Bediener ebenfalls durch das Okular 10 des Endoskops 1 sichtbar ist. Die Begrenzung der Vorgabemaße a₁, b₁, c₁ und d₁ durch umlaufende Kanten des Lehrenabschnitts 11 ist unter der Belichtung des Endoskops 1 dahingehend von Vorteil, dass die Kanten das Licht stärker reflektieren als benachbarte Bereiche, so dass trotz vorhandener Schattenwirkungen stets ein guter Kontrast erzeugt wird und die Vorgabemaße a₁, b₁, c₁ und d₁ für den Benutzer gut erkennbar sind.

In einem weiteren Schritt S4 wird die zu überprüfende Abmessung des Bauteilfehlers nunmehr mit dem entsprechenden Vorgabemaß a₁, b₁, c₁ und d₁ der Lehre 10 durch den Bediener visuell verglichen und dann im Schritt S5 durch den Bediener bewertet, ob die zu überprüfende Abmessung des Bauteilfehlers das Vorgabemaß a₁, b₁, c₁ und d₁ überschreitet oder nicht. Überschreitet die zu überprüfende Abmessung das Vorgabemaß, so wird das Bauteil als Ausschuss deklariert. Ist die zu überprüfende Abmessung hingegen kleiner als das Vorgabemaß, so wird das Bauteil als gut bewertet. Ein wesentlicher Vorteil der Verwendung der Lehre 10 besteht darin, dass durch einen einfachen visuellen Vergleich des entsprechenden Vorgabemaßes a₁, b₁, c₁ und d₁ mit der zu überprüfenden Abmessung des Bauteilfehlers eine eindeutige und schnelle Aussage darüber getroffen werden kann, ob die zu überprüfende Abmessung des Bauteilfehlers das Vorgabemaß a₁, b₁, c₁ und d₁, das als Bezugsnormal dient, überschreitet oder nicht. Entsprechend einfach und schnell kann bewertet werden, ob das Bauteil aufgrund des überprüften Bauteilfehlers "gut" oder "beanstandet" ist. Da unter Verwendung der Lehre 10 lediglich der Soll-Zustand mit dem Ist-Zustand des Bauteilfehlers verglichen wird, bleibt eine Messung unter Ermittlung von Zahlenwerten aus. Entsprechend kann das Endoskop 1 sehr einfach und damit kostengünstig ausgebildet sein. Das erfindungsgemäße Verfahren ist also zerstörungsfrei, flexibel einsetzbar, sowie schnell, einfach, preiswert und mit reproduzierbarem Bewertungsergebnis durchführbar. Darüber kann das Verfahren in situ durchgeführt werden, ohne das zu überprüfende Bauteil ausbauen zu müssen.

Es sollte klar sein, dass anstelle der Lehre 10 auch eine Lehre verwendet werden kann, die einen Lehrenabschnitt 14 gemäß Figur 3 aufweist, oder alternativ auch eine ähnlich ausgebildete Lehre. Der in seinem Endbereich gebogene Lehrenabschnitt 14 kann je nach Art und Lage des Bauteilfehlers die visuelle Bewertung durch den Benutzer vereinfachen.

Die Schritte S2 bis S5 werden wiederholt, bis sämtliche der zu überprüfenden Hohlräume auf vorhandene Bauteilfehler untersucht und die identifizierten Bauteilfehler auf ihr Gefahrenpotential bewertet wurden.

Es sollte klar sein, dass zur Durchführung des erfindungsgemäßen Verfahrens auch ein Endoskop verwendet werden kann, das anders als das in Figur 1 dargestellte Endoskop 1 ausgebildet ist. So kann es sich beispielsweise auch um ein Endoskop handeln, das anstelle eines starren Endoskopschaftes 2 einen flexiblen Endoskopschaft aufweist. Ebenso kann ein Video-Endoskop verwendet werden, auch wenn dies in Bezug auf die Anschaffungskosten von Nachteil ist.

Ferner sollte klar sein, dass die Ausbildung der in den Figuren dargestellten Lehrenabschnitte 11 und 14 nicht als einschränkend anzusehen sind. Insbesondere können natürlich die Zahlenwerte der Vorgabemaße a, b, c, d und e in Abhängigkeit von der zu beurteilenden Bauteilfehlerart und deren Lage variieren.

Obwohl die Erfindung im Detail durch das bevorzugte Ausführungsbeispiel näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen.

## Patentansprüche

1. Verfahren zur Überprüfung der Einhaltung zumindest eines Vorgabemaßes (a₁, b₁, c₁, d₁; a₂, b₂, c₂, d₂ e) eines innerhalb eines von außen zugänglichen Hohlraums eines Bauteils vorhanden Bauteilfehlers, das die Schritte aufweist:
- Einführen eines Endoskopschaftes (2) eines Endoskops (1) in den Hohlraum des Bauteils derart, dass der Bauteilfehler für einen Bediener durch das Endoskop (1) sichtbar ist,
- Einführen einer stabartig ausgebildeten, das Vorgabemaß (a₁, b₁, c₁, d₁; a₂, b₂, c₂, d₂ e) definierenden Lehre (10) in den Hohlraum des Bauteils und Positionieren der Lehre (10) derart, dass das Vorgabemaß (a₁, b₁, c₁, d₁; a₂, b₂, c₂, d₂ e) in unmittelbarer Umgebung einer zu überprüfenden Abmessung des Bauteilfehlers angeordnet und für den Bediener ebenfalls durch das Endoskop (1) sichtbar ist,
- Visuelles Vergleichen der zu überprüfenden Abmessung des Bauteilfehlers mit dem Vorgabemaß (a₁, b₁, c₁, d₁; a₂, b₂, c₂, d₂ e) der Lehre (10) durch den Bediener und
- messfreies Bewerten durch den Bediener, ob die zu überprüfende Abmessung des Bauteilfehlers das Vorgabemaß (a₁, b₁, c₁, d₁; a₂, b₂, c₂, d₂ e) überschreitet oder nicht.

2. Verfahren nach Anspruch 1,
**dadurch gekennzeichnet, dass**
dieses an einem im bestimmungsgemäßen Zustand montierten Bauteil in situ durchgeführt wird.

3. Verfahren nach einem der vorhergehenden Ansprüche,
**dadurch gekennzeichnet, dass**
es sich bei dem Bauteilfehler um einen Oberflächenfehler handelt, dass der Oberflächenfehler mit einer farbigen Prüfflüssigkeit behandelt wird, um den Oberflächenfehler optisch hervorzuheben, und dass das Endoskop (1) seinen Arbeitsbereich mit sichtbarem Licht ausleuchtet.

4. Verfahren nach einem der Ansprüche 1 bis 3,
**dadurch gekennzeichnet, dass**
es sich bei dem Bauteilfehler um einen Oberflächenfehler handelt, dass der Oberflächenfehler mit einer fluoreszierenden Prüfflüssigkeit behandelt wird, und dass das Endoskop (1) seinen Arbeitsbereich mit UV-Licht ausleuchtet, bevorzugt mit UV-Licht und sichtbarem Licht.

5. Verfahren nach einem der vorhergehenden Ansprüche,
**dadurch gekennzeichnet, dass**
das Vorgabemaß (a₁, b₁, c₁, d₁; a₂, b₂, c₂, d₂ e) durch einen Abschnitt im Bereich des freien Endes der Lehre (10) definiert ist.

6. Verfahren nach einem der vorhergehenden Ansprüche,
**dadurch gekennzeichnet, dass**
das Vorgabemaß (a₁, b₁, c₁, d₁; a₂, b₂, c₂, d₂ e) der Lehre (10) beidseitig durch Kanten der Lehre (10) definiert ist.

7. Verfahren nach Anspruch 6,
**dadurch gekennzeichnet, dass**
zumindest eine Kante durch eine umlaufende Nut (12; 15) oder einen umlaufenden Vorsprung der Lehre (10) gebildet ist.

8. Verfahren nach einem der Ansprüche 5 bis 7,
**dadurch gekennzeichnet, dass**
die Lehre (10) in einem vorbestimmten Abstand (e) vor dem das Vorgabemaß (a₁, b₁, c₁, d₁; a₂, b₂, c₂, d₂) definierenden Abschnitt abgewinkelt ausgebildet ist, wobei der Winkel (α) bevorzugt 90° beträgt.

9. Verfahren nach einem der vorhergehenden Ansprüche,
**dadurch gekennzeichnet, dass**
die Lehre (10) aus einem korrosionsbeständigen Stahl hergestellt ist, insbesondere aus V2A-Stahl.

10. Verfahren nach einem der vorhergehenden Ansprüche,
**dadurch gekennzeichnet, dass**
die Lehre (10) an demjenigen freien Ende, das nicht in den Hohlraum des Bauteils eingeführt wird, einen ergonomisch ausgebildeten Griffbereich (13) aufweist.

11. Verfahren nach einem der vorhergehenden Ansprüche, **dadurch gekennzeichnet, dass**
es sich bei dem Bauteil um ein Gasturbinenbauteil handelt, insbesondere um eine Kühlfluidkanäle aufweisende Turbinenschaufel.
